## Europäisches Patentamt
## European Patent Office
## Office européen des brevets

(11) Numéro de publication: **0 019 494**
**B1**

(12) **FASCICULE DE BREVET EUROPEEN**

(45) Date de publication du fascicule du brevet:
**29.12.82**

(21) Numéro de dépôt: **80400378.8**

(22) Date de dépôt: **20.03.80**

(51) Int. Cl.³: **F 16 C 7/02**

(54) **Bielle de commande ou de transmission d'efforts.**

(30) Priorité: **26.03.79 FR 7907980**

(43) Date de publication de la demande:
**26.11.80 Bulletin 80/24**

(45) Mention de la délivrance du brevet:
**29.12.82 Bulletin 82/52**

(84) Etats contractants désignés:
**BE DE FR GB IT NL SE**

(56) Documents cités:
**FR-A-1 559 342**
**FR-A-2 077 189**
**US-A-3 362 253**
**US-A-3 411 379**

(73) Titulaire: **Société Anonyme de Recherches de Mécanique Appliquée, B.P. 13, F-26240 Saint Vallier sur Rhone (FR)**

(72) Inventeur: **Robert, Daniel, 3 Rue des Potiers, F-26240 Saint Vallier (FR)**

(74) Mandataire: **Boivin, Claude, 9, rue Edouard-Charton, F-78000 Versailles (FR)**

BUNDESDRUCKEREI BERLIN

## Bielle de commande ou de transmission d'efforts

La présente invention concerne une bielle de commande ou de transmission d'effort dont les extrémités sont munies de paliers et qui est formée de fibres ou fils continus enrobés de résine et enrobés autour des éléments intérieurs des paliers.

Il existe à l'heure actuelle des bielles de commande et de transmission d'efforts qui comportent un corps tubulaire constitué par des fibres à haute résistance agglomérées par une résine synthétique polymérisée, et qui sont munies d'articulations à leurs extrémités. Dans la plupart des bielles de ce genre actuellement réalisées, chaque extrémité est tronconique et entoure un embout métallique destiné à recevoir l'articulation et comportant une portée tronconique de même forme sur laquelle l'extrémité du corps est serrée par un frettage.

GB-A-1 162 022 décrit cependant une bielle tubulaire comportant à chacune de ses extrémités un palier autour duquel sont entoulées des bandes de fils continus formant une série de couches superposées. Ces fils sont enduits d'un composé à base de polyuréthane qui est cuit après enroulement. Cette bielle est plus légère que celle à embout métallique et ses caractéristiques sont meilleures. Mais les fils sont accrochés suivant des trajets parallèles. Il en résulte que, quoique la bielle ait une bonne résistance à la traction ou à la compression, elle est très fragile transversalement. Elle peut facilement se cliver suivant un plan parallèle à son axe.

US-A-3 411 379 décrit une barre de liaison formée d'une série de bandes de filaments parallèles qui sont enroulées sur des éléments de palier et sont maintenues rapprochées dans le leur partie centrale par des anneaux. Mais ces barres de liaison présentent une mauvaise résistance à la compression, car les éléments de palier risquent de glisser sous une charge de compression ce qui entraîne une destruction rapide de l'élément de liaison, même pour un taux de charge faible.

La présente invention a pour objet une bielle de commande ou de transmission d'efforts qui présente à la fois une bonne résistance à la traction et à la compression, tout en étant peu fragile transversalement.

La bielle selon l'invention est caractérisée en ce que les éléments extérieurs des paliers sont constitués directement par la bielle elle-même et en ce que les fils ou fibres se croisent en quittant les éléments intérieurs des paliers. Ces fibres ou fils ainsi enchevêtrés suppriment tout plan de clivage et la bielle présente une bonne résistance transversalement. Elle présente également une bonne résistance à la compression, car, du fait du croisement, les éléments de palier sont entourés par les fibres ou fils presque sur toute leur périphérie et ne peuvent glisser. De plus, la longueur de collage sur les extrémités de la bielle est notablement augmentée.

La bielle peut éventuellement comporter un mandrin sur lequel sont disposés les fibres ou fils. Ce mandrin peut s'étendre jusqu'aux élément intérieurs des paliers. Dans ce cas, les fibres ou fils tendent à appliquer ces éléments intérieurs sur le mandrin de sorte que la bielle a une excellente résistance à la compression. Le mandrin peut également s'arrêter à une certaine distance des éléments intérieurs des paliers. On peut alors croiser les fils de façon qu'ils forment un angle relativement faible avec la direction longitudinale de la bielle. Les éléments intérieurs des paliers ne sont reliés au corps de la bielle que par l'enchevêtrement des fibres ou fils qui remplissent l'espace existant entre le mandrin et les éléments de palier; une telle bielle résiste très bien à la traction.

On a décrit ci-après, à titre d'exemples non limitatifs, trois modes de réalisation de la bielle selon l'invention avec référence au dessin annexé dans lequel:

La Figure 1 est une vue en coupe axiale d'une bielle munie de paliers à rotule à ses extrémités,

La Figure 2 en est une vue en élévation, avec coupe partielle suivant II-II de la Figure 1,

La Figure 3 en est une vue en coupe transversale suivant III-III de la Figure 1.

La Figure 4 est une vue en élévation, avec coupe partielle, d'une partie d'une autre mode de réalisation.

La Figure 5 est une vue semblable à la Figure 4 d'un troisième mode de réalisation.

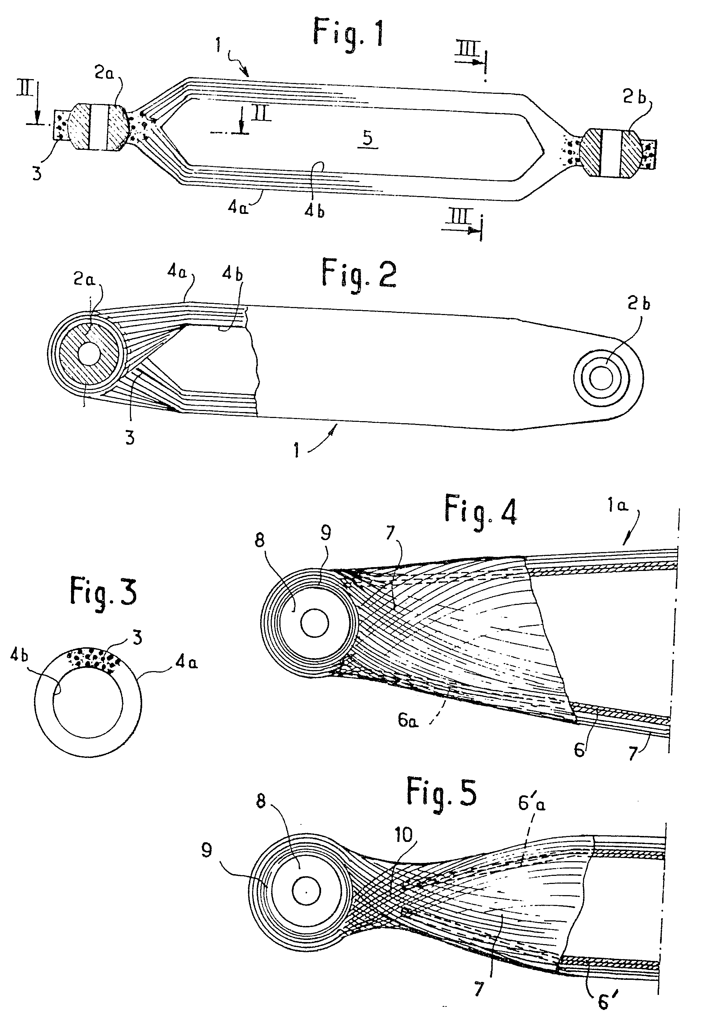

Aux Figures 1 à 3, la bielle 1 comporte, à chacune de ses extrémités, un élément de rotule intérieur 2a ou 2b, l'élément extérieur de cette rotule étant constitué par le bielle elle-même. Une fibre ou un fil continu 3 en carbone, en Kevlar (marque déposée) ou en verre, enrobé de résine, ou encore un ruban de fibres ou de fils continus juxtaposés, est enroulé suivant un angle supérieur à 180° et de préférence égal à au moins 270° autour des éléments de rotule intérieurs d'où il part suivant un chemin croisé pour former le corps de la bielle qui est tubulaire et dont on voit en 4a le contour extérieur et en 4b le contour intérieur, la bielle présentant en son centre un évidement 5. Après enroulement la résine a été polymérisée.

Dans le mode de réalisation de la Figure 4, la bielle 1a comporte un support en fibres de verre, 6, formant mandrin, dont la partie médiane est cylindrique alors que ses extrémités 6a sont tronconiques. Des couches superposées de rubans de fibres de carbone 7 sont disposées sur ce mandrin. Ces rubans sont enroulés sur les éléments intérieurs 8 de paliers d'extrémité qui prennent appui sur le mandrin 6 et dont les rubans partent en se croisant; ces éléments intérieurs peuvent être cylindriques, sphériques ou en forme de sphère tronquée, comme dans le mode de réalisation des Figures 1 à 3. Des fils de carbone auxiliaire 9 ont été enroulées sur l'élément 8, avant mise en place des rubans 7. Cette bielle résiste très bien à la compression. Par ailleurs, les rubans sont collés sur les extrémités tronconiques 6a du mandrin sur une longueur nettement plus grande que s'ils étaient disposés longitudinalement.

Dans le mode de réalisation de la Figure 5, la bielle comporte encore un support en fibres de verre 6' formant mandrin dont les extrémités 6'a sont tronconiques. Mais les éléments intérieurs 8 des paliers d'extrémité se trouvent à une certaine distance des extrémités du mandrin. Les fils ou rubans de fibres 7 sont enroulés sur les éléments 8 suivant un angle au moins égal à 270° et quittent ces éléments en faisant un angle relativement faible avec la direction longitudinale de la bielle, ce qui leur permet d'être obliques sur une portion de la partie cylindrique du mandrin 6'. Les fils ou rubans 7 se croisent suivant une zone resserrée 10 qui remplit l'espace existant entre un élément 8 et l'extrémité correspondante 6'a du mandrin 6', ce qui empêche toute striction dans le cas d'un effort de traction auquel la bielle résiste très bien.

Il va de soi que la présente invention ne doit pas être considérée comme limitée aux modes de réalisation décrits et représentés, mais en couvre, au contraire, toutes les variantes.

## Revendications

1. Bielle de commande ou de transmission d'effort dont les extrémités sont munies de paliers et qui est formée de fibres ou fils continus enrobés de résine (3 ou 7) et enroulés autour des éléments intérieurs (2a, 2b ou 8) des paliers, caractérisée en ce que le éléments extérieurs des paliers sont constitués directement par la bielle elle-même et en ce que les fils ou fibres 3 ou 7 se croisent en quittant les éléments intérieurs (2a, 2b ou 8).

2. Bielle selon la revendication 1, caractérisée en ce qu'elle comporte un mandrin (6 ou 6') sur lequel sont disposés les fibres ou fils (3).

3. Bielle selon la revendication 2, caractérisée en ce que le mandrin (6) s'étend jusqu'aux éléments intérieurs (8) des paliers.

4. Bielle selon la revendication 2, caractérisée en ce que les extrémités du mandrin (6') sont situées à une certaine distance des éléments intérieurs des paliers.

5. Bielle selon la revendication 4, caractérisée en ce que les fibres ou fils (3 ou 7) sont enroulés sur des éléments intérieurs des paliers suivant un angle d'au moins 270°.

6. Bielle suivant l'une des revendications 1 à 5, caractérisée en ce que les fibres ou fils se croisent suivant une zone resserrée (10).

## Patentansprüche

1. Steuer- oder Lastübertragungsstange, deren Enden mit Gelenklagern versehen sind und die aus in Harz eingebetteten und um die inneren Elemente (2a, 2b oder 8) der Gelenklager herumgeschlungenen Fasern oder Endlosfäden (3 oder 7) gebildet ist, dadurch gekennzeichnet, daß die äußeren Elemente der Gelenklager unmittelbar durch die Stange selbst gebildet sind und daß die Fasern oder Fäden (3 oder 7) sich beim Verlassen der inneren Elemente (2a, 2b oder 8) kreuzen.

2. Stange nach Anspruch 1, dadurch gekennzeichnet, daß sie einen Kern (6 oder 6') aufweist, auf dem die Fasern oder Fäden (3) angeordnet sind.

3. Stange nach Anspruch 3, dadurch gekennzeichnet, daß sich der Kern (6) bis zu den inneren Elementen (8) der Gelenklager erstreckt.

4. Stange nach Anspruch 2, dadurch gekennzeichnet, daß die Enden des Kerns (6') in einem bestimmten Abstand von den inneren Elementen der Gelenklager angeordnet sind.

5. Stange nach Anspruch 4, dadurch gekennzeichnet, daß die Fasern oder Fäden (3 oder 7) um die inneren Elemente der Gelenklager längs einem Winkel von mindestens 270° herumgeschlungen sind.

6. Stange nach einem der Ansprüche 1 bis 5, dadurch gekennzeichnet, daß die Fasern oder Fäden sich längs einer zusammengeschrumpften Zone (10) kreuzen.

## Claims

1. Control or force transmission rod, the ends of which are provided with bearings and which is formed of continuous fibres or wires covered with resin (3 or 7) and wound around internal bearing elements (2a, 2b or 8), characterized in that the external bearing elements are formed directly by the rod itself and in that the wires or fibres 3 or 7 intersect as they emerge from the internal elements (2a, 2b or 8).

2. Rod according to claim 1, characterized in that it comprises a mandrel (6 or 6') on which the fibres or wires (3) are disposed.

3. Rod according to claim 2, characterized in that the mandrel (6) extends to the internal bearing elements (8).

4. Rod according to claim 2, characterized in that the ends of the mandrel (6') are located at a certain distance from the internal bearing elements.

5. Rod according to claim 4, characterized in that the fibres or wires (3 or 7) are wound on the internal bearing elements according to an angle of at least 270°.

6. Rod according to any one of claims 1 to 5, characterized in that the fibres or wires intersect in a narrow zone (10).

# Fig. 1

# Fig. 2

# Fig. 3

# Fig. 4

# Fig. 5